# EUROPEAN PATENT APPLICATION

(11) **EP 4 769 179 A1**
(43) Date of publication of application: **01.07.2026**
(21) Application number: 25220427.6
(22) Date of filing: 03.12.2025
(51) Int. Cl.: G06F 16/9032, G06F 16/909

(54) **INFOTAINMENT DEVICE AND OPERATING METHOD THEREOF**

(30) Priority: 24.12.2024 KR 20240196228
(71) Applicant: 42dot Inc., Seongnam-si, Gyeonggi-do 13449 (KR)
(72) Inventor: Kim, Seungmin, 13449 Seongnam-si, Gyeonggi-do (KR); Ji, Seunghyun, 13449 Seongnam-si, Gyeonggi-do (KR); Kim, Daeyun, 13449 Seongnam-si, Gyeonggi-do (KR)
(74) Representative: Grünecker Patent- und Rechtsanwälte PartG mbB

(57) **Abstract**

A method of operating an infotainment device includes extracting context information by inputting an utterance of a user regarding a place to a model, obtaining a search condition for identifying the place based on the context information, and providing a response to the user based on the search condition and a place visit history of the user.

## Description

### CROSS-REFERENCE TO RELATED APPLICATIONS

This application claims the benefit of Korean Patent Application No. 10-2024-0196228, filed on December 24, 2024, in the Korean Intellectual Property Office, the entire disclosure of which is incorporated herein by reference for all purposes.

### BACKGROUND

### 1. Field of the Invention

One or more embodiments relate to an infotainment device and an operating method thereof.

### 2. Description of the Related Art

An infotainment device installed in a vehicle allows a user to search for various locations or provides information about the locations. A location search system provided by an existing infotainment device relies on matching user input (e.g., clicks or utterances) to keywords and has a disadvantage of failing to identify specific context when the user input is in natural language.

A vehicle or mobile navigation system is being developed to provide personalized services for each user, in addition to general navigation functions.

The above description has been possessed or acquired by the inventor(s) in the course of conceiving the present disclosure and is not necessarily an art publicly known before the present application was filed.

### SUMMARY

Embodiments provide technology of obtaining search conditions for identifying a place based on context information extracted by inputting, to a model, an utterance of a user regarding the place.

Embodiments provide technology of providing a response to a user, based on search conditions and a place visit history of the user.

However, the technical aspects are not limited to the aforementioned aspects, and other technical aspects may be present.

According to an aspect, there is provided a method of operating an infotainment device, the method including extracting context information by inputting an utterance of a user regarding a place to a model, obtaining a search condition for identifying the place based on the context information, and providing a response to the user based on the search condition and a place visit history of the user.

The context information may include time information included in the utterance, regional information regarding the place, and category information regarding the place.

The obtaining may include setting a time range included in the search condition, based on the time information.

The providing may include extracting at least one place candidate corresponding to the search condition from among places included in the place visit history, generating a summary of the at least one place candidate, and providing the summary and information about the at least one place candidate as the response.

The place visit history may include a location of a place visited by the user, a date and a time of visit of the user to the place, and a visit frequency of the user to the place.

According to another aspect, there is provided an electronic device including a memory including instructions and at least one processor electrically connected to the memory and configured to execute the instructions, wherein the instructions, when executed by the at least one processor, may cause the electronic device to extract context information by inputting an utterance of a user regarding a place to a model, obtain a search condition for identifying the place based on the context information, and provide a response to the user based on the search condition and a place visit history of the user.

The context information may include time information included in the utterance, regional information regarding the place, and category information regarding the place.

The instructions, when executed by the at least one processor, may cause the electronic device to set a time range included in the search condition, based on the time information.

The instructions, when executed by the at least one processor, may cause the electronic device to extract at least one place candidate corresponding to the search condition from among places included in the place visit history, generate a summary of the at least one place candidate, and provide the summary and information about the at least one place candidate as the response.

The place visit history may include a location of a place visited by the user, a date and a time of visit of the user to the place, and a visit frequency of the user to the place.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram illustrating an infotainment device according to an embodiment;
FIGS. 2 and 3 are diagrams illustrating an operation of obtaining search conditions, according to an embodiment;
FIG. 4 is a diagram illustrating an operation of extracting a place candidate, according to an embodiment;
FIG. 5 is a diagram illustrating an operation of obtaining a summary of a place candidate, according to an embodiment;
FIG. 6 is a flowchart illustrating a method according to an embodiment;
FIG. 7 is a diagram illustrating an operation of an infotainment device, according to an embodiment;
FIG. 8 is a flowchart illustrating a method according to an embodiment; and
FIG. 9 is a schematic block diagram of an electronic device according to an embodiment.

### DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like are used to describe various components, the components are not limited to the terms. These terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms, including technical and scientific terms, used herein have the same meaning as commonly understood by one of ordinary skill in the art to which the present disclosure pertains. Terms, such as those defined in commonly used dictionaries, should be construed to have meanings matching with contextual meanings in the relevant art, and are not to be construed to have an ideal or excessively formal meaning unless otherwise defined herein.

Hereinafter, the embodiments are described in detail with reference to the accompanying drawings. When describing the embodiments with reference to the accompanying drawings, like reference numerals refer to like components, and any repeated description related thereto will be omitted.

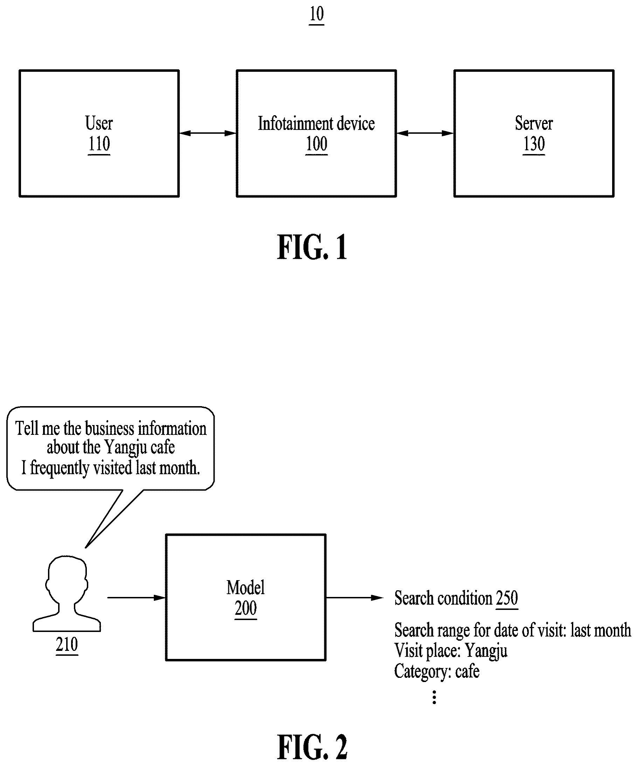

FIG. 1 is a diagram illustrating an infotainment device according to an embodiment.

Referring to FIG. 1, according to an embodiment, an infotainment system 10 may include an infotainment device 100, a user 110, and/or a server 130. Infotainment is a compound word of information and entertainment and may refer to a new type of service that combines information with entertainment. The infotainment device 100 may be installed in a vehicle (e.g., a vehicle in which the user 110 is riding) and may provide various pieces of information and entertainment functions to a user (e.g., the user 110 including a driver and/or a fellow passenger) of the vehicle. For example, the infotainment device 100 may provide navigation and services (e.g., services such as phone applications) linked with a mobile device (e.g., a smartphone) to the vehicle and may allow the user 110 to use the services provided to the vehicle. The infotainment device 100 may provide information obtained through the server 130 to the vehicle. For example, the infotainment device 100 may obtain information such as real-time traffic information, surrounding facility information, real-time weather information, and weather forecast through the server 130 and provide the obtained information to the vehicle. The vehicle may refer to a vehicle that transports goods and/or people and may include, for example, vehicles such as automobiles, trains, ships, boats, aircraft, kickboards, and/or bicycles. The infotainment device 100 may provide various entertainment functions to the vehicle, such as audio streaming, video playback, social network service (SNS), Internet search, and game play. For example, the infotainment device 100 may provide the user 110 with entertainment functions stored in the infotainment device 100 or external multimedia content obtained through the server 130.

According to an embodiment, the infotainment device 100 may perform a personalized search function. The infotainment device 100 may output a response according to an utterance of the user 110 or control a function of the vehicle. The infotainment device 100 may generate a command to respond to the utterance of the user 110 and/or control at least some functions of the vehicle using a generative model (e.g., a model 200 of FIG. 2). The generative model may include an on-device generative model included within the infotainment device 100 or a cloud generative model located outside (e.g., the server 130) the infotainment device 100. For example, the infotainment device 100 may input the utterance of the user 110 to the on-device generative model included within the infotainment device 100 and may provide the response to the user 110. For example, the infotainment device 100 may transmit the utterance of the user 110 to the server 130 and may receive the response generated through the cloud generative model from the server 130.

According to an embodiment, the vehicle in which the user 110 may ride, the server 130, and the infotainment device 100 may perform communication using a network (not shown). For example, the network may include a local area network (LAN), a wide area network (WAN), a value added network (VAN), a mobile radio communication network, a satellite communication network, and combinations thereof. The network is a comprehensive data communication network that allows the vehicle, the server 130, and the infotainment device 100 to communicate with each other smoothly and may include wired Internet, wireless Internet, and mobile wireless communication networks. In addition, the wireless communication networks may include, but are not limited to, wireless LAN (e.g., Wi-Fi), Bluetooth, Bluetooth low energy, Zigbee, Wi-Fi Direct (WFD), ultra-wideband (UWB), infrared communication (infrared data association (IrDA)), a near field communication (NFC), or the like.

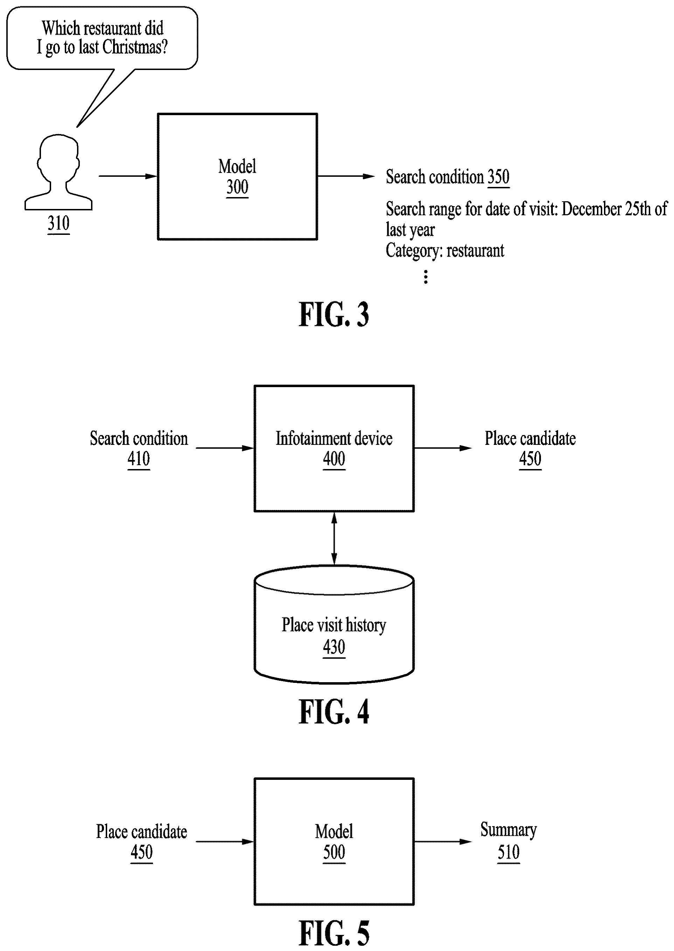

FIGS. 2 and 3 are diagrams illustrating an operation of obtaining search conditions, according to an embodiment.

Referring to FIG. 2, according to an embodiment, an infotainment device (e.g., the infotainment device 100 of FIG. 1) may receive (or obtain) an utterance of a user 210 (e.g., the user 110 of FIG. 1). The infotainment device 100 may receive the utterance of the user 210 regarding a place. The infotainment device 100 may input the utterance of the user 210 regarding a place to the model 200. The model 200 may be a large language model (LLM) in which a relationship between a structure, vocabulary, and/or context of sentences included in an utterance of a user may be trained. For example, the infotainment device 100 may input a command utterance (e.g., "Tell me the business information about the Yangju cafe I frequently visited last month") of the user 210 regarding a place to the model 200.

According to an embodiment, the infotainment device 100 may input the command utterance (e.g., "Tell me the business information about the Yangju cafe I frequently visited last month") of the user 210 regarding a place to the model 200 to extract context information. The context information may include time information included in the utterance, regional information regarding the place, and/or category information regarding the place. The context information may further include a visit frequency to the place.

According to an embodiment, the infotainment device 100 may obtain a search condition 250 for identifying the place based on the extracted context information. The search condition 250 may be a condition for extracting at least one place candidate (e.g., a place candidate 450 of FIG. 4) corresponding to the search condition 250 from among places included in a place visit history of the user 210. The infotainment device 100 may obtain the search condition 250 corresponding to the command utterance (e.g., "Tell me the business information about the Yangju cafe I frequently visited last month") of the user 210 regarding a place. For example, the infotainment device 100 may set a search range for a date of visit to the place to "last month". In another example, the infotainment device 100 may set a visit place as "Yangju". In another example, the infotainment device 100 may set the category information regarding the place to "cafe". In another example, the infotainment device 100 may set the visit frequency for the place to "five or more times within the search range of the date". The visit frequency for the place may change based on the search range of the date of visit to the place and may be not fixed. The search condition 250 set by the infotainment device 100 may include, but is not limited to, "last month", "Yangju", "cafe", and/or "five or more times", and the number of search conditions 250 may be increased or decreased based on the utterance of the user 210.

Referring to FIG. 3, according to an embodiment, an infotainment device (e.g., the infotainment device 100 of FIG. 1) may receive an utterance of a user 310 (e.g., the user 210 of FIG. 2) regarding a place. The infotainment device 100 may input the utterance of the user 310 regarding a place to a model 300 (e.g., the model 200 of FIG. 2). For example, the infotainment device 100 may input a query-type utterance (e.g., "Which restaurant did I go to last Christmas?") of the user 210 regarding a place to the model 300.

According to an embodiment, the infotainment device 100 may input the query-type utterance (e.g., "Which restaurant did I go to last Christmas?") of the user 210 regarding a place to the model 300 to extract context information. For example, the infotainment device 100 may extract "last Christmas", which is time information included in the utterance. In another example, the infotainment device 100 may extract "restaurant" as category information regarding the place.

According to an embodiment, the infotainment device 100 may set a time range included in a search condition 350 (e.g., the search condition 250 of FIG. 2), based on the time information included in the utterance of the user 310 regarding a place. For example, the infotainment device 100 may set the time range corresponding to "last Christmas", which is the time information included in the utterance, to "December 25th of last year". The infotainment device 100 may convert natural language obtained from the user 310 into the appropriate search condition 350. The infotainment device 100 may intuitively and easily obtain information regarding the place by converting the natural language obtained from the user 310 into the appropriate search condition 350.

According to an embodiment, the infotainment device 100 may obtain the search condition 350 for identifying the place based on the extracted context information. The infotainment device 100 may obtain the search condition 350 corresponding to the query-type utterance (e.g., "Which restaurant did I go to last Christmas?") of the user 310 regarding a place. For example, the infotainment device 100 may set a search range for a date of visit to the place to "December 25th of last year", which is a time range corresponding to "last Christmas", which is the time information included in the utterance. For another example, the infotainment device 100 may set the category information regarding the place to "restaurant". The number of search conditions 350 may be reduced compared to the number of search conditions 250 described with reference to FIG. 2.

FIG. 4 is a diagram illustrating an operation of extracting a place candidate, according to an embodiment.

Referring to FIG. 4, according to an embodiment, an infotainment device 400 (e.g., the infotainment device 100 of FIG. 1) may obtain (or receive) a search condition 410 (e.g., the search condition 250 of FIG. 2 or the search condition 350 of FIG. 3). The search condition 410 may be transmitted (or delivered) from a model (e.g., the model 200 of FIG. 2 or the model 300 of FIG. 3).

According to an embodiment, the infotainment device 400 may obtain a place visit history 430. The place visit history 430 may include a location of a place visited by a user (e.g., the user 110 of FIG. 1) and a visit frequency of the user 110 to the place. The place visit history 430 may be a place visit history of a vehicle in which the infotainment device 400 is installed. The place visit history 430 is linked to location information regarding a terminal (not shown) used by the user 110 and may be a place visit history of the user 110. The infotainment device 400 may obtain (or receive) the place visit history 430 from a server (e.g., the server 130 of FIG. 1).

According to an embodiment, the infotainment device 400 may provide a response to the user 110 based on the search condition 410 and the place visit history 430 of the user 110. The infotainment device 400 may extract at least one place candidate 450 corresponding to the search condition 410 from among places included in the place visit history 430. For example, the infotainment device 400 may extract the at least one place candidate 450 corresponding to "December 25th of last year", which is a time range included in the search condition 410, and "restaurant", which is category information regarding the place. The at least one place candidate 450 may include one or more restaurants visited on December 25th of last year.

According to an embodiment, the infotainment device 400 may extract an identification (ID) value for the at least one place candidate 450 corresponding to the search condition 410 from among the places included in the place visit history 430.

According to an embodiment, the infotainment device 400 may transmit the place candidate 450 selected by the user 110 from the at least one place candidate 450 to the place visit history 430. The infotainment device 400 may train a place visit pattern of the user 110 by storing the place candidate 450 selected by the user 110 from the at least one place candidate 450 in the server 130. The infotainment device 400 may use a separate training model to train the place visit pattern of the user 110. The separate training model may be different from the model (e.g., the model 200 of FIG. 2, the model 300 of FIG. 3, and a model 500 of FIG. 5). A training model for training the place visit pattern of the user 110 may include a neural network, and the neural network (or an artificial neural network) may include a statistical training algorithm that imitates biological neurons in machine learning and cognitive science. The neural network may generally refer to a model having a problem-solving ability implemented through artificial neurons or nodes forming a network through synaptic connections where the strength of the synaptic connections is changed through learning. A neuron of the neural network may include a combination of weights or biases. The neural network may include one or more layers, each including one or more neurons or nodes. The neural network may infer a result from a predetermined input by changing weights of the neurons through training. The neural network may include a deep neural network (DNN). The neural network may include a convolutional neural network (CNN), a recurrent neural network (RNN), a perceptron, a multilayer perceptron, a feed forward (FF) network, a radial basis function (RBF) network, a deep feed forward (DFF) network, a long short-term memory (LSTM), a gated recurrent unit (GRU), an auto encoder (AE), a variational auto encoder (VAE), a denoising auto encoder (DAE), a sparse auto encoder (SAE), a Markov chain (MC), a Hopfield network (HN), a Boltzmann machine (BM), a restricted Boltzmann machine (RBM), a deep belief network (DBN), a deep convolutional network (DCN), a deconvolutional network (DN), a deep convolutional inverse graphics network (DCIGN), a generative adversarial network (GAN), a liquid state machine (LSM), an extreme learning machine (ELM), an echo state network (ESN), a deep residual network (DRN), a differentiable neural computer (DNC), a neural turning machine (NTM), a capsule network (CN), a Kohonen network (KN), a visual geometry group (VGG) network, and an attention network (AN). The infotainment device 400 may provide an optimal response to the user 110 by training the place visit pattern of the user 110.

FIG. 5 is a diagram illustrating an operation of obtaining a summary of a place candidate, according to an embodiment.

Referring to FIG. 5, according to an embodiment, the infotainment device 400 (e.g., the infotainment device 100 of FIG. 1) may generate a summary 510 of the at least one place candidate 450. For example, the infotainment device 400 may input the at least one place candidate 450 to the model 500 to generate the summary 510 of the at least one place candidate 450. The generated summary 510 may include snippet sentences. It may be noted that the model 500 may be the same model as the model described with reference to FIGS. 1 to 4 (e.g., the model 200 of FIG. 2 and the model 300 of FIG. 3) but is not limited thereto. For example, the model 500 may be a different model (e.g., a sentence summarization model) from the model 200.

According to an embodiment, the infotainment device 400 may obtain information about the at least one place candidate 450. For example, the infotainment device 400 may search for the at least one place candidate 450 by using a search engine and may obtain the information about the at least one place candidate 450. The infotainment device 400 may obtain the information about the at least one place candidate 450 by inputting an ID value for the at least one place candidate 450 to the search engine. The search engine may be installed in a navigation system included in the infotainment device 400. A source from which the infotainment device 400 obtains the information about the at least one place candidate 450 may not be limited to the search engine and may be obtained from a server (e.g., the server 130 of FIG. 1). The infotainment device 400 may provide the summary 510, generated from the model 500, and/or the information about the at least one place candidate 450 as the response. The infotainment device 400 may provide the summary 510, generated from the model 500, and/or the information about the at least one place candidate 450 as one or more of a voice and text. For example, the infotainment device 400 may provide the summary 510 generated from the model 500 and/or the information about the at least one place candidate 450 to a user as text, in response to determining that providing the summary 510 and/or the information to the user as a voice requires a certain amount of time.

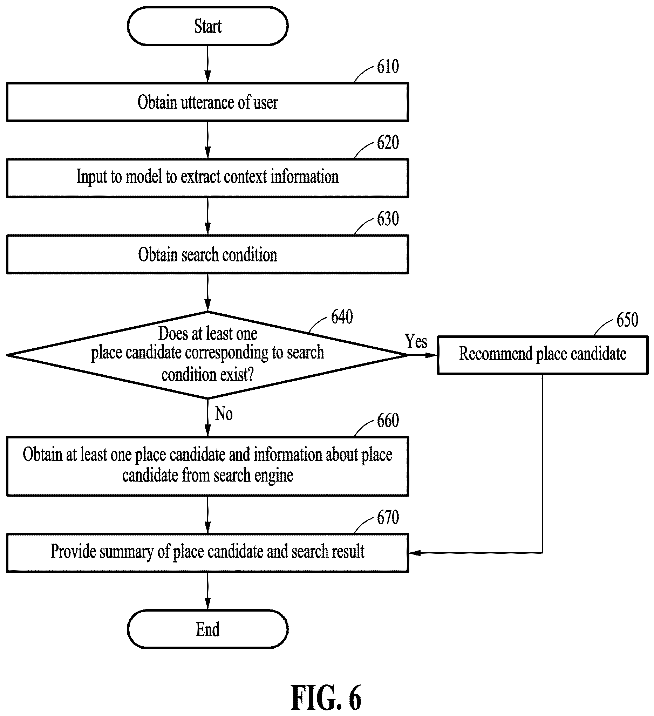

FIG. 6 is a flowchart illustrating a method according to an embodiment.

Referring to FIG. 6, according to an embodiment, operations 610 to 670 may be performed by an infotainment device as described with reference to FIGS. 1 to 9 (e.g., the infotainment device 100 of FIG. 1).

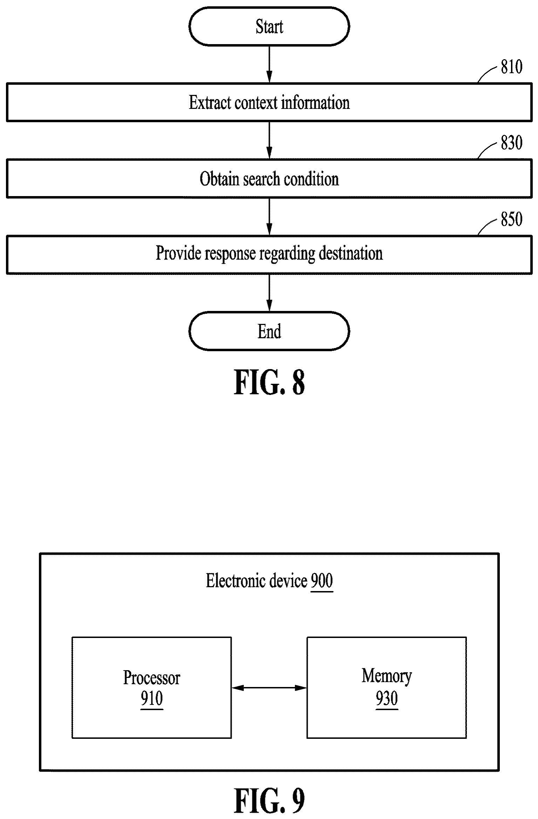

According to an embodiment, operations 610 to 670 may be performed by a processor (e.g., a processor 910 of FIG. 9) of the infotainment device 100 (e.g., an electronic device 900 of FIG. 9) described with reference to FIG. 1.

In operation 610, the infotainment device 100 may obtain an utterance of a user (e.g., the user 110 of FIG. 1). The infotainment device 100 may receive the utterance of the user 110 regarding a place.

In operation 620, the infotainment device 100 may input the utterance of the user 110 regarding a place to a model (e.g., the model 200 of FIG. 2) to extract context information.

In operation 630, the infotainment device 100 may obtain a search condition (e.g., the search condition 410 of FIG. 4) for identifying the place based on the extracted context information.

In operation 640, the infotainment device 100 may extract the at least one place candidate 450 corresponding to the search condition 410 from among places included in a place visit history (e.g., the place visit history 430 of FIG. 4). The infotainment device 100 may determine whether the at least one place candidate 450 corresponding to the search condition 410 among the places included in the place visit history (e.g., the place visit history 430 of FIG. 4) exists.

In operation 650, the infotainment device 100 may recommend the at least one place candidate 450 to the user 110 in response to determining that the at least one place candidate 450 corresponding to the search condition 410 among the places included in the place visit history 430 exists.

In operation 660, the infotainment device 100 may obtain the at least one place candidate 450 from a search engine in response to determining that the at least one place candidate 450 corresponding to the search condition 410 among the places included in the place visit history 430 does not exist. In this case, the at least one place candidate 450 obtained from the search engine may be a place candidate that does not correspond to the search condition 410. The infotainment device 100 may obtain information about the at least one place candidate 450 from the search engine.

In operation 670, the infotainment device 100 may generate a summary (e.g., the summary 510 of FIG. 5) of the at least one place candidate 450. For example, the infotainment device 100 may input the summary 510 of the at least one place candidate 450 to a model (e.g., the model 500 of FIG. 5) to generate the summary 510 of the at least one place candidate 450. The infotainment device 100 may obtain the information about the at least one place candidate 450 from the search engine. For example, the infotainment device 100 may search for the at least one place candidate 450 from the search engine and may obtain the information about the at least one place candidate 450 as a search result. The infotainment device 100 may provide the summary 510 of the at least one place candidate 450 and the information about the at least one place candidate 450 as the search result to the user 110.

Operations 610 to 670 may be performed sequentially, but embodiments are not limited thereto. For example, two or more operations may be performed in parallel.

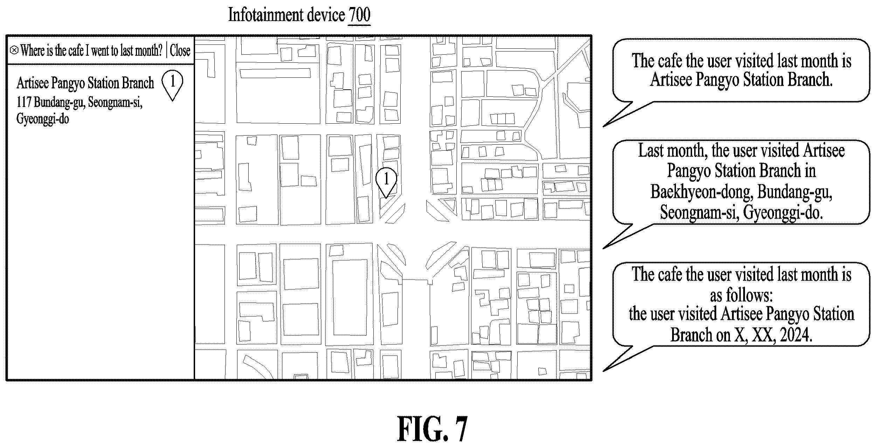

FIG. 7 is a diagram illustrating an operation of an infotainment device, according to an embodiment.

Referring to FIG. 7, according to an embodiment, an infotainment device 700 (e.g., the infotainment device 400 of FIG. 4) may recommend at least one place candidate (e.g., the place candidate 450 of FIG. 4) to a user (e.g., the user 110 of FIG. 1), in response to determining that the at least one place candidate 450 corresponding to a search condition (e.g., the search condition 410 of FIG. 4) among places included in a place visit history (e.g., the place visit history 430 of FIG. 4) exists. For example, "Artisee Pangyo Station Branch" may be the at least one place candidate 450. A series of operations of obtaining the search condition 410 based on an utterance (e.g., "Where is the cafe I went to last month?") of the user 110 by the infotainment device 700 may be substantially the same as the operations performed by an infotainment device (e.g., the infotainment device 100 of FIG. 1 and the infotainment device 400 of FIG. 4) described with reference to FIGS. 1 to 6. Accordingly, a repeated description thereof is omitted.

According to an embodiment, the infotainment device 700 may input the at least one place candidate 450 to a model (e.g., the model 500 of FIG. 5) to generate a summary (e.g., the summary 510 of FIG. 5) of the at least one place candidate 450. For example, the infotainment device 700 may input "Artisee Pangyo Station Branch" to the model 500 to generate the summary of "Artisee Pangyo Station Branch". The infotainment device 700 may provide the summary of "Artisee Pangyo Station Branch" to the user 110. For example, the infotainment device 700 may provide the user 110 with "The cafe the user visited last month is Artisee Pangyo Station Branch", which is the summary of "Artisee Pangyo Station Branch". In another example, the infotainment device 700 may provide the user 110 with "Last month, the user visited Artisee Pangyo Station Branch in Baekhyeon-dong, Bundang-gu, Seongnam-si, Gyeonggi-do". In another example, the infotainment device 700 may provide the user 110 with "The cafe the user visited last month is as follows: the user visited Artisee Pangyo Station Branch on X, XX, 2024". The infotainment device 700 may use the model 500 to provide any one of various summaries of the at least one place candidate 450. Even if the utterance of the user 110 is the same, the summary 510 generated from the model 500 and provided by the infotainment device 700 may be different from before or may be provided differently.

According to an embodiment, the infotainment device 700 may mark a place corresponding to the at least one place candidate 450 on a map displayed on a graphical user interface (GUI) of the infotainment device 700. The infotainment device 700 may mark, on the map, a place corresponding to one place candidate determined to be most relevant from the at least one place candidate 450. For example, the infotainment device 700 may mark "Artisee Pangyo Station Branch" on the map displayed on the infotainment device 700.

According to an embodiment, the infotainment device 700 may display information about the at least one place candidate 450 corresponding to an ID value. For example, the information about the at least one place candidate 450 may include an address of the at least one place candidate 450. The infotainment device 700 may display the address of "Artisee Pangyo Station Branch" on the GUI of the infotainment device 700.

According to an embodiment, the infotainment device 700 may provide other functions to the user 110, in addition to the summary of the at least one place candidate 450. For example, the infotainment device 700 may generate a question asking whether to search for a route to the at least one place candidate 450. The infotainment device 700 may input the at least one place candidate 450 to the model 500, may generate the question asking whether to search for a route to the at least one place candidate 450, and may provide the question to the user 110. For example, the infotainment device 700 may provide the user 110 with the question such as "Should I guide you to Artisee Pangyo Station Branch?".

FIG. 8 is a flowchart illustrating a method according to an embodiment.

Referring to FIG. 8, according to an embodiment, operations 810 to 850 may be performed by the infotainment device 100 of FIG. 1 described with reference to FIGS. 1 to 9.

According to an embodiment, operations 810 to 850 may be performed by a processor (e.g., the processor 910 of FIG. 9) of the infotainment device 100 (e.g., the electronic device 900 of FIG. 9) described with reference to FIG. 1.

In operation 810, the infotainment device 100 may input an utterance of a user (e.g., the user 110 of FIG. 1) regarding a place to a model (e.g., the model 200 of FIG. 2) to extract context information.

In operation 830, the infotainment device 100 may obtain a search condition (e.g., the search condition 250 of FIG. 2) for identifying the place based on the context information.

In operation 850, the infotainment device 100 may provide a response to the user 110 based on the search condition 250 and a place visit history (e.g., the place visit history 430 of FIG. 4) of the user 110.

Operations 810 to 850 may be performed sequentially, but embodiments are not limited thereto. For example, two or more operations may be performed in parallel.

FIG. 9 is a schematic block diagram of an electronic device according to an embodiment.

Referring to FIG. 9, according to an embodiment, an electronic device 900 (e.g., the infotainment device 100 of FIG. 1) may include a memory 930 and a processor 910.

The memory 930 may store instructions (or programs) executable by the processor 910. For example, the instructions may include instructions for executing an operation of the processor 910 and/or an operation of each component of the processor 910.

The memory 930 may include one or more computer-readable storage media. The memory 930 may include non-volatile storage elements (e.g., a magnetic hard disc, an optical disc, a floppy disc, flash memory, electrically programmable memory (EPROM), and electrically erasable and programmable memory (EEPROM)).

The memory 930 may be a non-transitory medium. The term "non-transitory" may indicate that a storage medium is not embodied in a carrier wave or a propagated signal. However, the term "non-transitory" should not be interpreted to mean that the memory 930 is non-movable.

The processor 910 may process data stored in the memory 930. The processor 910 may execute computer-readable code (e.g., software) stored in the memory 930 and instructions triggered by the processor 910.

The processor 910 may be a data-processing device implemented by hardware, including a circuit having a physical structure to perform desired operations. The desired operations may include, for example, code or instructions included in a program.

The data-processing device implemented by hardware may include, for example, a microprocessor, a central processing unit (CPU), a processor core, a multi-core processor, a multiprocessor, an application-specific integrated circuit (ASIC), and a field-programmable gate array (FPGA).

The processor 910 may cause the electronic device 900 to perform one or more operations by executing the code and/or instructions stored in the memory 930. The operations performed by the electronic device 900 may be substantially the same as the operations performed by the infotainment device 100 described with reference to FIGS. 1 to 9. Accordingly, a repeated description thereof is omitted.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor, or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is singular; however, one of ordinary skill in the art will appreciate that a processing device may include a plurality of processing elements and a plurality of types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored in a non-transitory computer-readable recording medium.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read-only memory (CD-ROM) discs and digital video discs (DVDs); magneto-optical media such as optical discs; and hardware devices that are specifically configured to store and perform program instructions, such as read-only memory (ROM), random access memory (RAM), flash memory, and the like. Examples of program instructions include both machine code, such as one produced by a compiler, and files containing higher-level code that may be executed by the computer using an interpreter.

The above-described hardware devices may be configured to act as one or more software modules in order to perform the operations of the above-described embodiments, or vice versa.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

## Claims

1. A method of operating an infotainment device, the method comprising:
extracting context information by inputting an utterance of a user regarding a place to a model;
obtaining a search condition for identifying the place based on the context information; and
providing a response to the user based on the search condition and a place visit history of the user.

2. The method of claim 1, wherein
the context information comprises time information included in the utterance, regional information regarding the place, and category information regarding the place.

3. The method of claim 2, wherein
the obtaining comprises setting a time range included in the search condition, based on the time information.

4. The method of claim 1, wherein
the providing comprises:
extracting at least one place candidate corresponding to the search condition from among places included in the place visit history;
generating a summary of the at least one place candidate; and
providing the summary and information about the at least one place candidate as the response.

5. The method of claim 1, wherein
the place visit history comprises
a location of a place visited by the user, a date and a time of visit of the user to the place, and a visit frequency of the user to the place.

6. An electronic device comprising:
a memory comprising instructions; and
at least one processor electrically connected to the memory and configured to execute the instructions,
wherein the instructions, when executed by the at least one processor, cause the electronic device to:
extract context information by inputting an utterance of a user regarding a place to a model;
obtain a search condition for identifying the place based on the context information; and
provide a response to the user based on the search condition and a place visit history of the user.

7. The electronic device of claim 6, wherein
the context information comprises time information included in the utterance, regional information regarding the place, and category information regarding the place.

8. The electronic device of claim 7, wherein
the instructions, when executed by the at least one processor, cause the electronic device to:
set a time range included in the search condition, based on the time information.

9. The electronic device of claim 6, wherein
the instructions, when executed by the at least one processor, cause the electronic device to:
extract at least one place candidate corresponding to the search condition from among places included in the place visit history;
generate a summary of the at least one place candidate; and
provide the summary and information about the at least one place candidate as the response.

10. The electronic device of claim 6, wherein
the place visit history comprises a location of a place visited by the user, a date and a time of visit of the user to the place, and a visit frequency of the user to the place.

11. A non-transitory computer-readable storage medium storing instructions that, when executed by a processor, cause the processor to perform the method of claim 1.
